# EUROPÄISCHE PATENTANMELDUNG

(11) **EP 4 140 943 A1**
(43) Veröffentlichungstag der Anmeldung: **01.03.2023**
(21) Anmeldenummer: 21020428.5
(22) Anmeldetag: 27.08.2021
(51) Int. Cl.: C01B 3/34, B01D 53/48, B01J 23/80, C01B 3/50, B01D 53/75, B01D 53/86

(54) **VERWENDUNG KOHLENMONOXIDREICHER OFFGASE ALS EINSATZSTOFFE IN DAMPFREFORMERN**

(71) Anmelder: Linde GmbH, 82049 Pullach (DE)
(72) Erfinder: Lang, Martin, 82049 Pullach (DE); Maier, Alexander, 82049 Pullach (DE); Ettner, Florian, 82049 Pullach (DE)
(74) Vertreter: Fischer, Werner

(57) **Zusammenfassung**

Die Erfindung betrifft ein Verfahren sowie eine Vorrichtung zur stofflichen Verwertung eines kohlenmonoxidreichen, Kohlenwasserstoffe sowie hydrierbare Schwefelverbindungen enthaltenden Offgases (1), wobei ein schwefelfreier Reformereinsatz (14) unter Verwendung des Offgases (1) gebildet und anschließend durch Dampfreformierung (D) zu einem wasserstoffhaltigen Synthesegas (16) umgesetzt wird. Kennzeichnend hierbei ist, dass das kohlenmonoxidreiche, Kohlenwasserstoffe sowie hydrierbare Schwefelverbindungen enthaltende Offgas (1) angewärmt (E1) und mit einer Temperatur zwischen 150 und 250°C, bevorzugt zwischen 150 und 190°C einer Hydrolyse (R1) unterzogen wird, um die hydrierbaren Schwefelverbindungen mit katalytischer Unterstützung zu Schwefelwasserstoff umzusetzen und ein von hydrierbaren Schwefelverbindungen freies Offgas (4) zu erhalten, das anschließend über einem Zinkoxid enthaltenden Festbett (Z1) entschwefelt wird.

## Beschreibung

Die Erfindung betrifft ein Verfahren zur stofflichen Verwertung eines kohlenmonoxidreichen, Kohlenwasserstoffe sowie hydrierbare Schwefelverbindungen enthaltenden Offgases, wobei ein schwefelfreier Reformereinsatz unter Verwendung des Offgases gebildet und anschließend durch Dampfreformierung zu einem wasserstoffhaltigen Synthesegas umgesetzt wird.

Weiterhin betrifft die Erfindung eine Vorrichtung zur Durchführung des erfindungsgemäßen Verfahrens.

Als hydrierbare Schwefelverbindungen werden im Rahmen des vorliegenden Textes solche Schwefelverbindungen verstanden, die mit Wasserstoff bzw. Wasser zu Schwefelwasserstoff umgesetzt werden können.

Als "Offgase" bezeichnet der Fachmann Gasgemische, die in Industrieprozessen als Nebenprodukte anfallen. Insbesondere entstehen bei der Verarbeitung von fossilen oder biogenen Energieträgern in Raffinerien kohlenmonoxidreiche, Kohlenwasserstoffe sowie hydrierbare Schwefelverbindungen wie etwa Carbonylsulfid enthaltende Offgase, die auch als "Raffineriegase" bekannt sind. Nach dem Stand der Technik werden derartige Offgase, die typisch zwischen 3 und 25mol-% Kohlenmonoxid sowie mehr als 10mol-% Kohlenwasserstoffe aufweisen und zu mehr als 30mol-% aus Wasserstoff bestehen können, vorwiegend energetisch genutzt, wozu sie entweder vollständig oder nach Abtrennung von Wasserstoff als Brenngase in Feuerungen eingesetzt werden, um etwa Prozessdampf zu erzeugen oder Wärme für eine chemische Reaktion zu liefern.

Außerdem wird versucht, Offgase wie Raffineriegase stofflich zu nutzen, da die in ihnen enthaltenen Kohlenwasserstoffe wertvolle Ressourcen darstellen, deren wirtschaftliches Potential bei einer thermischen Verwertung nur zu einem geringen Teil realisierbar ist. Bekannt ist beispielsweise die Umsetzung von Raffineriegasen in einem Dampfreformer, um Wasserstoff zu gewinnen. Dabei wird ein kohlenwasserstoffhaltiger Haupteinsatz, bei dem es sich etwa um Erdgas, Flüssiggas oder Naphtha handelt, nach der Zumischung von Raffineriegas auf eine Temperatur zwischen 250 und 400°C vorgewärmt und anschließend einer Hydrierung unterzogen, um Schwefelverbindungen mit katalytischer Unterstützung zu Schwefelwasserstoff umzusetzen. Zu seiner Entschwefelung wird das bei der Hydrierung gewonnene Gasgemisch über ein Festbett geführt, das Zinkoxid enthält, mit dem der Schwefelwasserstoff zu Wasser und Zinksulfid, das im Festbett verbleibt, reagiert. Um Rußbildung im Dampfreformer durch den thermischen Zerfall von Kohlenwasserstoffen mit mehr als einem Kohlenstoffatom zu vermeiden, kann sich der Entschwefelung eine Vorreformierung anschließen. Hierbei wird das entschwefelte Gasgemisch unter Zugabe von Dampf einem Vorreformer zugeführt, in dem Kohlenwasserstoffe mit mehr als einem Kohlenstoffatom zu Methan umgesetzt werden. Nach Zumischung von weiterem Dampf wird das ggf. vorreformierte Gasgemisch mit einem Schwefelgehalt von weniger als 0,1 ppmv als schwefelfreier Reformereinsatz erhalten, der nach Anwärmung in einem Einsatzüberhitzer mit einer Temperatur zwischen 500 und 650°C dem Dampfreformer zugeführt wird.

Um die zur Hydrierung und Entschwefelung sowie ggf. auch die zur Vorreformierung eingesetzten Einrichtungen kompakt und kostengünstig ausführen zu können, erfolgt die Zumischung von Dampf größtenteils stromabwärts von diesen. Problematisch hierbei ist, dass im Raffineriegas vorliegendes Kohlenmonoxid bereits bei der trocken durchgeführten Vorwärmung stromaufwärts des Hydrierreaktors, aber auch im Hydrierreaktor selbst sowie nachfolgenden Apparaten zerfällt und Ruß bildet, der die weiter stromabwärts eingesetzten Katalysatoren verlegen kann. Darüber hinaus wird Kohlenmonoxid unter den Bedingungen der Hydrierung und in Gegenwart großer Wasserstoffmengen unter starker Wärmefreisetzung methanisiert.

Damit die Rußbildung ein vertretbares Maß nicht übersteigt und die maximal zulässige Temperatur des im Hydrierreaktor eingesetzten Katalysators nicht überschritten wird, ist die dem Haupteinsatz zumischbare Raffineriegasmenge sehr beschränkt, sodass gewöhnlich nur ein kleiner Teil der in einer Raffinerie anfallenden Raffineriegase stofflich verwertet werden kann, während der größere Teil entweder im Feuerraum des Dampfreformers oder an anderer Stelle verbrannt werden muss.

Industrieprozesse wie die Raffinierung von Ölen, bei denen kohlenmonoxidreiche, Kohlenwasserstoffe sowie hydrierbare Schwefelverbindungen enthaltende Offgase anfallen, werden immer häufiger auf minimale Dampfproduktion bzw. minimale Kohlendioxid-Emissionen getrimmt. Die zur Verfügung stehenden Offgasmengen übersteigen somit oft die in den Prozessen einsetzbaren Brenngasmengen, sodass ein Bedarf an alternativen Verwertungsmöglichkeiten besteht.

Aufgabe der vorliegenden Erfindung ist es daher, ein Verfahren der gattungsgemäßen Art sowie eine Vorrichtung zu dessen Durchführung anzugeben, die es erlauben, einen größeren Teil der in einem Industrieprozess anfallenden Offgase stofflich zu verwerten, als es nach dem Stand der Technik möglich ist.

Diese Aufgabe wird verfahrensseitig erfindungsgemäß dadurch gelöst, dass das kohlenmonoxidreiche, Kohlenwasserstoffe sowie hydrierbare Schwefelverbindungen enthaltenden Offgas angewärmt und mit einer Temperatur zwischen 150 und 250°C, bevorzugt zwischen 150 und 190°C einer Hydrolyse unterzogen wird, um die hydrierbaren Schwefelverbindungen mit katalytischer Unterstützung zu Schwefelwasserstoff umzusetzen und ein von hydrierbaren Schwefelverbindungen freies Offgas zu erhalten, das anschließend über einem Zinkoxid enthaltenden Festbett entschwefelt wird.

Bei der Hydrolyse werden die hydrierbaren Schwefelverbindungen in einer katalytisch unterstützen Reaktion mit Wasser gespalten. Damit alle hydrierbaren Schwefelverbindungen zu Schwefelwasserstoff umgesetzt werden können, ist ein Mindestwassergehalt erforderlich. Falls der Wassergehalt des Offgases kleiner als dieser Mindestwert ist, wird stromaufwärts der Hydrolyse Dampf zugeführt, sodass der Mindestwassergehalt erreicht wird.

Anders als bei einer Hydrierung wird unter den Verfahrensbedingungen der Hydrolyse Kohlenmonoxid nicht methanisiert, sodass auch bei großen Kohlenmonoxidgehalten im Offgas die Temperatur nur unwesentlich zunimmt und in einem Bereich bleibt, in dem Kohlenmonoxid nicht thermisch zerfällt. Eine Rußbildung in dem zur Hydrolyse eingesetzten Reaktor kann somit sicher vermieden werden.

Zur Einstellung der für die Hydrolyse erforderlichen Temperatur wird vorgeschlagen, das Offgas im indirekten Wärmetausch gegen kondensierenden Dampf, der mit einem Druck zwischen 10 und 15bar vorliegt, anzuwärmen. Vorzugsweise ist der Dampf nicht überhitzt, sodass die Temperatur, mit der das Offgas der Hydrolyse zugeführt wird, durch die über den Druck sehr genau und einfach kontrollierbare Kondensationstemperatur des Dampfes bestimmt wird. Alternativ kann die Temperatur auch über eine elektrische Heizung oder durch Wärmeübertragung von einem anderen Prozessmedium eingestellt werden.

Mit der bei der Hydrolyse erreichten Temperatur wird das Offgas zur Entschwefelung weitergeleitet. Da die Reaktion von Zinkoxid mit Schwefelwasserstoff zu Wasser und Zinksulfid zu keiner wesentlichen Temperaturänderung führt, besteht auch hier keine Gefahr einer Rußbildung durch thermische Kohlenmonoxidzersetzung.

Ruß könnte allerdings gebildet werden, wenn bei der Weiterbehandlung des entschwefelten Offgases die Temperatur angehoben wird. Damit hierbei Ruß nicht oder nur in geringem Maß entsteht, wird vorgeschlagen, den Kohlenmonoxidpartialdruck im entschwefelten Offgas vor einer Anwärmung durch die Zumischung von Dampf herabzusetzen. Vorzugsweise wird dem entschwefelten Offgas die gesamte im weiteren Prozess noch benötigte Dampfmenge zugeführt, ehe seine Temperatur auf mehr als 250°C angehoben wird.

Um im entschwefelten Offgas vorliegende Kohlenwasserstoffe mit mehr als zwei Kohlenstoffatomen zu Methan umzusetzen und seinen Kohlenmonoxidgehalt zu reduzieren, kann das entschwefelte Offgas einer Vorreformierung unterzogen werden, wozu es nach Zumischung von Dampf angewärmt und mit einer Temperatur zwischen 300 und 500°C, vorzugsweise zwischen 350 und 450°C einem Vorreformer zugeführt wird. Durch die Vorreformierung wird der schwefelfreie Reformereinsatz erhalten, der anschließend auf eine Temperatur zwischen 500 und 650°C angewärmt und der Dampfreformierung zugeführt wird.

Eine Ausgestaltung des erfindungsgemäßen Verfahrens sieht vor, den schwefelfreien Reformereinsatz unter Verwendung des kohlenmonoxidreichen, Kohlenwasserstoffe sowie hydrierbare Schwefelverbindungen enthaltenden Offgases und zumindest eines weiteren Kohlenwasserstoffe sowie hydrierbare Schwefelverbindungen enthaltenden Einsatzes, der auch der Haupteinsatz des Verfahrens sein kann, zu bilden. Der weitere Einsatz, bei dem es sich etwa um Erdgas, Flüssiggas oder Naphtha handelt, besitzt einen geringeren Kohlenmonoxidgehalt als das Offgas, weshalb er wie oben beschrieben hydriert und über einem Zinkoxid enthaltenden Festbett entschwefelt wird, ehe er mit dem erfindungsgemäß entschwefelten Offgas zusammengeführt und ggf. gemeinsam mit diesem einer Vorreformierung unterzogen wird. Nach seiner Entschwefelung liegt der weitere Einsatz mit einer Temperatur von bis zu 400°C vor, sodass zur Vermeidung oder Unterdrückung einer Rußbildung sinnvollerweise dem entschwefelten Offgas vor der Zusammenführung mit dem entschwefelten weiteren Einsatz die gesamte im weiteren Prozess noch benötigten Dampfmenge zugemischt wird.

Unter Umständen ist der Kohlenmonoxidgehalt des Offgases so hoch, dass die im Prozess einsetzbare Dampfmenge nicht ausreicht, um das entschwefelte Offgas ohne wesentliche Rußbildung zum schwefelfreien Reformereinsatz aufzubereiten. In diesem Fall sieht eine Ausgestaltung des erfindungsgemäßen Verfahrens vor, den Kohlenmonoxidgehalt des Offgases durch eine stromabwärts der Entschwefelung und stromaufwärts der Vor- bzw. Dampfreformierung angeordnete Wassergas-Shift zu reduzieren. Bevorzugt wird dem entschwefelten Offgas stromaufwärts der Wassergas-Shift ein Teil der zur Verfügung stehenden Prozessdampfmenge zugemischt, sodass ein Dampf-zu-Gas-Verhältnis zwischen 0,3 und 1,0 (auf molarer Basis) erreicht wird.

Falls das kohlenmonoxidreiche, Kohlenwasserstoffe sowie hydrierbare Schwefelverbindungen enthaltende Offgas einen hohen Wasserstoffanteil von mehr als 50mol-% aufweist, sieht eine zweckmäßige Variante der Erfindung vor, zur Entlastung des Dampfreformers den Wasserstoffanteil des Offgases stromaufwärts des Dampfreformers bis auf weniger als 50mol-% zu reduzieren. Vorzugsweise wird hierzu Wasserstoff aus dem Offgas stromaufwärts der Hydrolyse abgetrennt. Steht das Offgas mit ausreichend hohem Druck zur Verfügung, kann die Wasserstoffabtrennung über eine Membran erfolgen, wobei ein wasserstoffreiches Permeat und ein im Wasserstoffgehalt reduziertes Offgas als Retentat erhalten werden. Das wasserstoffreiche Permeat kann direkt oder nach Verdichtung einem Druckwechseladsorber zur Gewinnung eines Wasserstoffprodukts zugeführt werden, während das im Wasserstoffgehalt reduzierte Offgas weiter zum schwefelfreien Reformereinsatz aufbereitet wird.

Unabhängig von seinem Druck kann das Offgas auch durch Druckwechseladsorption behandelt werden, wobei das im Wasserstoffgehalt reduzierte Offgas mit niedrigem Druck als Restgas anfällt.

Weiterhin betrifft die Erfindung eine Vorrichtung zur stofflichen Verwertung eines kohlenmonoxidreichen, Kohlenwasserstoffe sowie hydrierbare Schwefelverbindungen enthaltenden Offgases, mit einer Aufbereitungseinrichtung zur Bildung eines schwefelfreien Reformereinsatzes unter Verwendung des Offgases sowie einem Dampfreformer, in dem der schwefelfreie Reformereinsatz durch Dampfreformierung zu einem wasserstoffhaltigen Synthesegas umsetzbar ist.

Die gestellte Aufgabe wird vorrichtungsseitig erfindungsgemäß dadurch gelöst, dass die Aufbereitungseinrichtung eine ersten Anwärmeinrichtung, einen Hydrolyseur sowie ein Zinkoxid enthaltendes Festbett umfasst, die so angeordnet sind, dass sie von dem Offgas seriell durchströmt werden können, um das Offgas auf eine Temperatur zwischen 150 und 250°C, bevorzugt zwischen 150 und 190°C anzuwärmen und nachfolgend einer Hydrolyse zu unterziehen, bei der ein von hydrierbaren Schwefelverbindungen freies Offgas erhalten wird, das anschließend über dem Zinkoxid enthaltenden Festbett entschwefelt wird.

In einer bevorzugten Ausgestaltung der erfindungsgemäßen Vorrichtung ist die stromaufwärts des Hydrolyseurs angeordnete erste Anwärmeinrichtung als Kondensator ausgeführt, in dem das Offgas im indirekten Wärmetausch gegen kondensierenden Mitteldruckdampf anwärmbar ist.

Eine weiter bevorzugte Ausgestaltung der erfindungsgemäßen Vorrichtung sieht einen als Teil der Aufbereitungseinrichtung stromabwärts des Zinkoxid enthaltenden Festbetts angeordneten Vorreformer vor, in dem das entschwefelte Offgas einer Vorreformierung unterzogen werden kann, bei der Kohlenwasserstoffe mit mehr als zwei Kohlenstoffatomen zu Methan umgesetzt und der Kohlenmonoxidgehalt des Offgases reduziert wird.

Zweckmäßigerweise ist stromaufwärts des Vorreformers und stromabwärts des Zinkoxid enthaltenden Festbetts eine zweite Anwärmeinrichtung platziert, über die das entschwefelte Offgas auf eine Temperatur zwischen 300 und 500°C, vorzugsweise zwischen 350 und 450°C angewärmt werden kann, mit der es dem Vorreformer zugeführt wird.

Sinnvollerweise ist zwischen dem Zinkoxid enthaltenden Festbett und der zweiten Anwärmeinrichtung eine erste Mischeinrichtung vorgesehen, über die dem entschwefelten Offgas Dampf zugemischt werden kann, um den thermischen Zerfall von Kohlenmonoxid während der Anwärmung und Rußablagerungen in der Anwärmeinrichtung sowie den sich in Strömungsrichtung des Offgases anschließenden Anlagenkomponenten zu verhindern oder zumindest zu unterdrücken.

In einer anderen bevorzugten Ausgestaltung weist die Aufbereitungseinrichtung der erfindungsgemäßen Vorrichtung eine dritte Anwärmeinrichtung, einen Hydrierreaktor sowie ein weiteres Zinkoxid enthaltendes Festbett auf, die so angeordnet sind, dass sie von einem weiteren, Kohlenwasserstoffe sowie hydrierbare Schwefelverbindungen umfassenden Einsatz seriell durchströmbar sind, um den weiteren Einsatz auf eine Temperatur zwischen 250 und 400°C aufzuwärmen und einer Hydrierung zu unterziehen, bei der im weiteren Einsatz enthaltene hydrierbare Schwefelverbindungen zu Schwefelwasserstoff umgesetzt werden, der anschließend über dem weiteren Zinkoxid enthaltenden Festbett entfernt wird.

Zweckmäßigerweise ist in dieser Ausgestaltung der erfindungsgemäßen Vorrichtung stromabwärts der ersten Mischeinrichtung eine zweite, mit dem weiteren Zinkoxid enthaltenden Festbett verbundene Mischeinrichtung angeordnet, über die das entschwefelte und mit Dampf gemischte Offgas mit dem entschwefelten weiteren Einsatz vereinigt werden kann.

In einer weiteren Ausgestaltung der Erfindungsgemäßen Vorrichtung umfasst die Aufbereitungseinrichtung einen stromabwärts des Zinkoxid enthaltenden Festbetts und stromaufwärts der Vor- bzw. Dampfreformierung angeordneten Shift-Reaktor, in dem das entschwefelte Offgas einer Wassergas-Shift unterzogen werden kann.

Die Aufbereitungseinrichtung kann auch eine Membraneinheit oder einen Druckwechseladsorber umfassen, durch die oder den Wasserstoff aus dem Offgas stromaufwärts des Dampfreformers abtrennbar ist.

Die Aufbereitungseinrichtung umfasst weiterhin einen stromaufwärts des Dampfreformers angeordneten Einsatzüberhitzer, in dem der unter Verwendung des entschwefelten Offgases gebildete schwefelfreie Reformereinsatz auf eine Temperatur zwischen 500 und 650°C angewärmt werden kann.

Durch die Erfindung ist es möglich, kohlenmonoxidreiche, Kohlenwasserstoffe sowie hydrierbare Schwefelverbindungen enthaltende Offgase in einem Dampfreformierungsprozess als Haupteinsatz oder sogar als alleinigen Einsatz zu verwenden.

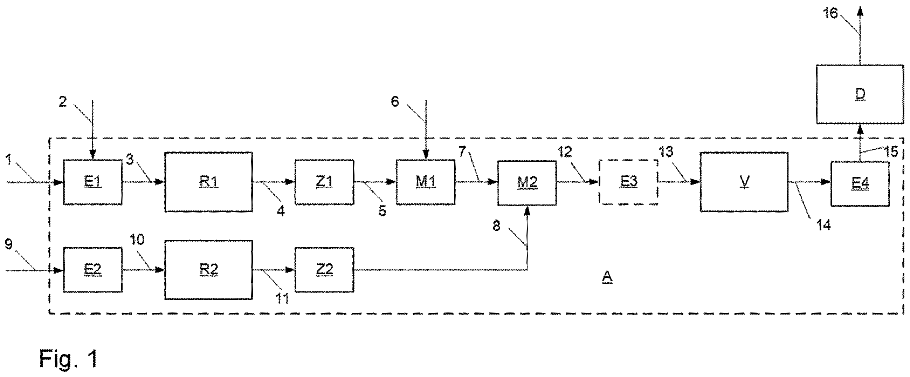

Im Folgenden soll die Erfindung anhand eines in der **Figur 1** schematisch dargestellten Ausführungsbeispiels näher erläutert werden.

Die Figur 1 zeigt eine Ausgestaltung der Erfindung, in der ein kohlenmonoxidreiches, Kohlenwasserstoffe sowie hydrierbare Schwefelverbindungen enthaltendes Offgas zusammen mit einem weiteren, hydrierbare Schwefelverbindungen sowie Kohlenwasserstoffe enthaltenden Einsatz zu einem schwefelfreien Reformereinsatz aufbereitet wird.

Über Leitung 1 wird ein kohlenmonoxidreiches, Kohlenwasserstoffe sowie hydrierbare Schwefelverbindungen wie etwa Carbonylsulfid enthaltendes Offgas, bei dem es sich beispielsweise um eine Raffineriegas handelt, einer in der Aufbereitungseinrichtung A angeordneten Anwärmeinrichtung E1 zugeführt, wo es in indirektem Wärmetausch gegen kondensierenden Mitteldruckdampf 2 auf eine Temperatur zwischen 150 und 250°C angewärmt wird. Das angewärmte Offgas 3 wird nachfolgend im Reaktor R1 einer Hydrolyse unterzogen, bei der die hydrierbaren Schwefelverbindungen zu Schwefelwasserstoff umgesetzt und ein von hydrierbaren Schwefelverbindungen freies Offgas 4 erhalten wird, das zu seiner Entschwefelung über das Zinkoxid enthaltende Festbett Z1 geführt wird. Weder bei der Hydrolyse noch der Entschwefelung kommt es zu einer wesentlichen Energiefreisetzung, so dass im Offgas 1 enthaltenes Kohlenmonoxid thermisch nicht zerfällt und Ruß bildet. Um auch in den weiteren Verfahrensschritten eine Rußbildung zu verhindern oder zumindest zu unterdrücken, wird das entschwefelte Offgas 5 in der ersten Mischeinrichtung M1 mit der gesamten im weiteren Prozess noch einsetzbaren Dampfmenge 6 gemischt, ehe es über Leitung 7 der zweiten Mischeinrichtung M2 zugeführt wird, um dort mit einem entschwefelten weiteren Einsatz 8, der eine Temperatur zwischen 250 und 400°C aufweist, zusammengeführt zu werden.

Der weitere Einsatz 9, bei dem es sich etwa um Erdgas handelt, enthält ebenfalls hydrierbare Schwefelverbindungen und Kohlenwasserstoffe, weist aber einen wesentlich geringeren Kohlenmonoxidgehalt als das Offgas 1 auf. Nach Anwärmung in der Anwärmeinrichtung E2 wird er über Leitung 10 mit einer Temperatur zwischen 250 und 400°C dem Hydrierreaktor R2 zugeführt, um hydrierbare Schwefelverbindungen zu Schwefelwasserstoff umzusetzen und einen hydrierten weiteren Einsatz 11 zu erhalten, der in einem weiteren Zinkoxid enthaltenden Festbett Z2 entschwefelt wird.

Falls die Temperatur des in der zweiten Mischeinrichtung M2 aus den entschwefelten Einsätzen 5 und 8 sowie Dampf 6 gebildeten Stoffgemisches 12 nicht ausreicht, um direkt dem Vorreformer V zugeführt zu werden, wird das Stoffgemisch 12 in der Anwärmeinrichtung E3 auf eine Temperatur zwischen 300 und 500°C angewärmt, ehe es über Leitung 13 dem Vorreformer V zugeführt wird, um Kohlenwasserstoffe mit mehr als einem Kohlenstoffatom zu Methan umzusetzen und einen schwefelfreien Reformereinsatz 14 zu erhalten, der im Einsatzüberhitzer E4 auf eine Temperatur zwischen 500 und 650°C angewärmt und über Leitung 15 in den Dampfreformer D zur Umsetzung in ein wasserstoffhaltiges Synthesegas 16 eingeleitet wird.

## Patentansprüche

1. Verfahren zur stofflichen Verwertung eines kohlenmonoxidreichen, Kohlenwasserstoffe sowie hydrierbare Schwefelverbindungen enthaltenden Offgases (1), wobei ein schwefelfreier Reformereinsatz (14) unter Verwendung des Offgases (1) gebildet und anschließend durch Dampfreformierung (D) zu einem wasserstoffhaltigen Synthesegas (16) umgesetzt wird, **dadurch gekennzeichnet, dass** das kohlenmonoxidreiche, Kohlenwasserstoffe sowie hydrierbare Schwefelverbindungen enthaltende Offgas (1) angewärmt (E1) und mit einer Temperatur zwischen 150 und 250°C, bevorzugt zwischen 150 und 190°C einer Hydrolyse (R1) unterzogen wird, um die hydrierbaren Schwefelverbindungen mit katalytischer Unterstützung zu Schwefelwasserstoff umzusetzen und ein von hydrierbaren Schwefelverbindungen freies Offgas (4) zu erhalten, das anschließend über einem Zinkoxid enthaltenden Festbett (Z1) entschwefelt wird.

2. Verfahren nach Anspruch 1, **dadurch gekennzeichnet, dass** das kohlenmonoxidreiche, Kohlenwasserstoffe sowie hydrierbare Schwefelverbindungen enthaltende Offgas (1) auf die für die Hydrolyse (R1) erforderliche Temperatur im indirekten Wärmetausch mit kondensierendem Mitteldruckdampf (2) angewärmt wird.

3. Verfahren nach einem der Ansprüche 1 oder 2, **dadurch gekennzeichnet, dass** das entschwefelte Offgas (5) nach Zumischung von Dampf (6) auf eine Temperatur zwischen 300 und 500°C angewärmt (E3) und einer Vorreformierung (V) unterzogen wird, bei der der schwefelfreie Reformereinsatz (14) entsteht.

4. Verfahren nach einem der Ansprüche 1 bis 3, **dadurch gekennzeichnet, dass** der schwefelfreie Reformereinsatz (14) unter Verwendung des kohlenmonoxidreichen, Kohlenwasserstoffe sowie hydrierbare Schwefelverbindungen enthaltenden Offgases (1) und eines weiteren Kohlenwasserstoffe sowie hydrierbare Schwefelverbindungen enthaltenden Einsatzes (9) gebildet wird, wobei der weitere Einsatz (9) hydriert (R2) und über einem weiteren Zinkoxid enthaltenden Festbett (Z2) entschwefelt wird, ehe er mit dem entschwefelten Offgas (5) zusammengeführt und gemeinsam mit diesem der Vorreformierung (V) unterzogen wird.

5. Verfahren nach Anspruch 4, **dadurch gekennzeichnet, dass** das entschwefelte Offgas (5) nach Zumischung von Dampf (6) mit dem entschwefelten weiteren Einsatz (8) zusammengeführt wird.

6. Verfahren nach einem der Ansprüche 1 bis 5, **dadurch gekennzeichnet, dass** das entschwefelte Offgas (5) einer Wassergas-Shift unterzogen wird.

7. Verfahren nach einem der Ansprüche 1 bis 6, **dadurch gekennzeichnet, dass** Wasserstoff aus dem Offgas abgetrennt wird.

8. Vorrichtung zur stofflichen Verwertung eines kohlenmonoxidreichen, Kohlenwasserstoffe sowie hydrierbare Schwefelverbindungen enthaltenden Offgases (1), mit einer Aufbereitungseinrichtung (A) zur Bildung eines schwefelfreien Reformereinsatzes (14) unter Verwendung des Offgases (1) sowie einem Dampfreformer (D), in dem der schwefelfreie Reformereinsatz (14) durch Dampfreformierung zu einem wasserstoffhaltigen Synthesegas (16) umsetzbar ist, **dadurch gekennzeichnet, dass** die Aufbereitungseinrichtung (A) eine ersten Anwärmeinrichtung (E1), einen Hydrolyseur (R1) sowie ein Zinkoxid enthaltendes Festbett (Z1) umfasst, die so angeordnet sind, dass sie von dem Offgas (1) seriell durchströmt werden können, um das Offgas (1) auf eine Temperatur zwischen 150 und 250°C, bevorzugt zwischen 150 und 190°C anzuwärmen und nachfolgend einer Hydrolyse zu unterziehen, bei der ein von hydrierbaren Schwefelverbindungen freies Offgas (4) erhalten wird, das anschließend über dem Zinkoxid enthaltenden Festbett (R1) entschwefelt wird.

9. Vorrichtung nach Anspruch 8, **dadurch gekennzeichnet, dass** die stromaufwärts des Hydrolyseurs (R1) angeordnete erste Anwärmeinrichtung (E1) als Kondensator ausgeführt ist, in dem das kohlenmonoxidreiche, Kohlenwasserstoffe sowie hydrierbare Schwefelverbindungen enthaltende Offgas (1) im indirekten Wärmetausch gegen kondensierenden Mitteldruckdampf (2) anwärmbar ist.

10. Vorrichtung nach einem der Ansprüche 9 oder 10, **dadurch gekennzeichnet, dass** die Aufbereitungseinrichtung (A) einen stromabwärts des Zinkoxid enthaltenden Festbetts (Z1) angeordneten Vorreformer (V) umfasst, in dem das entschwefelte Offgas (5) einer Vorreformierung unterzogen werden kann, bei der Kohlenwasserstoffe mit mehr als zwei Kohlenstoffatomen zu Methan umgesetzt wird.

11. Vorrichtung nach Anspruch 10, **dadurch gekennzeichnet, dass** stromaufwärts des Vorreformers (V) und stromabwärts des Zinkoxid enthaltenden Festbetts (Z1) eine zweite Anwärmeinrichtung (E3) platziert ist, über die das entschwefelte Offgas (5) auf eine Temperatur zwischen 300 und 500°C, vorzugsweise zwischen 350 und 450°C angewärmt werden kann.

12. Vorrichtung nach einem der Ansprüche 8 bis 11, **dadurch gekennzeichnet, dass** zwischen dem Zinkoxid enthaltenden Festbett (Z1) und der zweiten Anwärmeinrichtung (E3) eine erste Mischeinrichtung (M1) vorgesehen ist, über die dem entschwefelten Offgas (5) Dampf (6) zugemischt werden kann

13. Vorrichtung nach einem der Ansprüche 8 bis 12, **dadurch gekennzeichnet, dass** die Aufbereitungseinrichtung (A) eine dritte Anwärmeinrichtung (E2), einen Hydrierreaktor (R2) sowie ein weiteres Zinkoxid enthaltendes Festbett (Z2) aufweist, die so angeordnet sind, dass sie von einem weiteren, Kohlenwasserstoffe sowie hydrierbare Schwefelverbindungen umfassenden Einsatz (9) seriell durchströmbar sind, um den weiteren Einsatz auf eine Temperatur zwischen 250 und 400°C aufzuwärmen und einer Hydrierung zu unterziehen, bei der im weiteren Einsatz (9) enthaltene hydrierbare Schwefelverbindungen zu Schwefelwasserstoff umgesetzt werden, der anschließend über dem weiteren Zinkoxid enthaltenden Festbett (Z2) entfernt wird.

14. Vorrichtung nach Anspruch 13, **dadurch gekennzeichnet, dass** stromabwärts der ersten Mischeinrichtung (M1) eine zweite, mit dem weiteren Zinkoxid enthaltenden Festbett (Z2) verbundene Mischeinrichtung (M2) angeordnet ist, über die das entschwefelte und mit Dampf gemischte Offgas (7) mit dem entschwefelten weiteren Einsatz (8) vereinigt werden kann.

15. Vorrichtung nach einem der Ansprüche 8 bis 14, **dadurch gekennzeichnet, dass** sie einen stromabwärts des Zinkoxid enthaltenden Festbetts (Z1) und stromaufwärts der Vor- (V) bzw. Dampfreformierung (D) angeordneten Shift-Reaktor umfasst, in dem das entschwefelte Offgas (5) einer Wassergas-Shift unterzogen werden kann.
